# EUROPÄISCHE PATENTANMELDUNG

(11) **EP 2 511 120 A1**
(43) Veröffentlichungstag der Anmeldung: **17.10.2012**
(21) Anmeldenummer: 12157839.7
(22) Anmeldetag: 02.03.2012
(51) Int. Cl.: B60K 17/28, F02B 67/04, F16H 37/02

(54) **Vorrichtung mit einer Getriebeeinrichtung zum Versorgen von wenigstens einem Nebenaggregat eines Fahrzeuges mit Antriebsenergie**

(30) Priorität: 11.04.2011 DE 102011007143
(71) Anmelder: ZF Friedrichshafen AG, 88038 Friedrichshafen (DE)
(72) Erfinder: Speck, Frank-Detlef, 88085 Langenargen (DE); Banerjee, Alexander, 88094 Oberteuringen (DE)

(57) **Zusammenfassung**

Es wird eine Vorrichtung (1) mit einer Getriebeeinrichtung (2) zum Versorgen von wenigstens einem Nebenaggregat (3) eines Fahrzeuges (4) mit Antriebsenergie beschrieben. Eine Übersetzung der Getriebeeinrichtung (2) ist zumindest bereichsweise stufenlos variierbar und die Getriebeeinrichtung (2) ist eingangsseitig mit einem Antrieb einer Antriebsmaschine (5) eines Antriebsstranges (6) des Fahrzeuges (4) sowie ausgangsseitig mit dem Nebenaggregat (3) in Wirkverbindung bringbar. Die Getriebeeinrichtung (2) ist als mechanische Getriebeeinrichtung ausgeführt. Im Leistungspfad zwischen der Antriebsmaschine (5) und dem Nebenaggregat (3) ist eine Getriebeeinheit (7) vorgesehen, deren Übersetzung derart an die mechanische Getriebeeinrichtung (2) angepasst ist, dass die mechanische Getriebeeinrichtung (2) in einem Hauptbetriebsbereich im Wesentlichen im Bereich ihres Wirkungsgradmaximums betreibbar ist.

## Beschreibung

Die Erfindung betrifft eine Vorrichtung mit einer Getriebeeinrichtung zum Versorgen von wenigstens einem Nebenaggregat eines Fahrzeuges mit Antriebsenergie gemäß der im Oberbegriff des Patentanspruches 1 näher definierten Art.

Aus der Praxis bekannte Fahrzeuge, wie Lastkraftwagen, sind zur Darstellung verschiedener Funktionalitäten mit einer Vielzahl unterschiedlicher so genannter Nebenaggregate ausgeführt. Dabei werden unter anderem Lebensmittel zur Vermeidung von Transportschäden in so genannten Kühlaufliegern transportiert, innerhalb welchen eine Transporttemperatur über ein Kühlaggregat auf ein vordefiniertes Temperaturniveau eingestellt bzw. auf diesem gehalten wird. Um den dabei entstehenden Energiebedarf zur Verfügung stellen zu können, ist ein das Kühlaggregat mit elektrischer Energie versorgender Generator üblicherweise über eine hydraulische stufenlose Getriebeeinrichtung mit einem Fahrzeugantriebsstrang wirkverbunden und wird von einer Antriebsmaschine mit der dafür erforderlichen Antriebsleistung beaufschlagt. Im Bereich der hydraulischen stufenlosen Getriebeeinrichtung wird eine Drehzahl der vorzugsweise als Verbrennungsmotor ausgeführten Antriebsmaschine fortlaufend übersetzt, um den Generator konstant mit einer Drehzahl von ca. 3.000 Umdrehungen je Minute zu betreiben und das Kühlaggregat mit einem konstanten Drehstrom bei einer Spannung von 380 Volt und einer Frequenz von 50 Hertz versorgen zu können.

Bekannterweise sind hydraulische stufenlose Getriebeeinrichtungen in der Regel durch einen schlechten Wirkungsgrad von ca. 70 % gekennzeichnet, weshalb durch den während eines Transportes dauerhaft aufrecht zu haltenden Kühlbetrieb im Bereich eines Kühlaufliegers hohe Verlustleistungen auftreten, die einen unerwünscht hohen Mehrverbrauch im Bereich der Antriebsmaschine verursachen.

Der vorliegenden Erfindung liegt daher die Aufgabe zugrunde, eine Vorrichtung mit einer stufenlosen Getriebeeinrichtung zur Verfügung zu stellen, mittels der wenigstens ein Nebenaggregat eines Fahrzeuges mit Antriebsenergie versorgbar ist und die mit einem hohen Wirkungsgrad betreibbar ist.

Erfindungsgemäß wird diese Aufgabe mit einer Vorrichtung mit den Merkmalen des Patentanspruches 1 gelöst.

Bei der erfindungsgemäßen Vorrichtung mit einer Getriebeeinrichtung zum Versorgen von wenigstens einem Nebenaggregat eines Fahrzeuges mit Antriebsenergie ist eine Übersetzung der Getriebeeinrichtung zumindest bereichsweise stufenlos variierbar. Des Weiteren ist die Getriebeeinrichtung eingangsseitig mit einem Antrieb einer Antriebsmaschine eines Antriebsstranges des Fahrzeuges sowie ausgangsseitig mit dem Nebenaggregat in Wirkverbindung bringbar.

Erfindungsgemäß ist die Getriebeeinrichtung als mechanische Getriebeeinrichtung ausgeführt. Zusätzlich ist im Leistungspfad zwischen der Antriebsmaschine und dem Nebenaggregat eine Getriebeeinheit vorgesehen, deren Übersetzung derart an die mechanische Getriebeeinrichtung angepasst ist, dass die mechanische Getriebeeinrichtung in einem Hauptbetriebsbereich im Wesentlichen im Bereich ihres Wirkungsgradmaximums betreibbar ist.

Mit der erfindungsgemäßen Vorrichtung ist ein Nebenaggregat eines Fahrzeuges mit im Vergleich zu aus der Praxis bekannten Lösungen mit höherem Wirkungsgrad mit Antriebsenergie versorgbar, da mechanische stufenlose Getriebeeinrichtungen in der Regel im Betrieb mit einem höheren Wirkungsgrad betreibbar sind als hydraulische stufenlose Getriebeeinrichtungen. Die zusätzlich vorgesehene Getriebeeinheit bietet zudem die Möglichkeit, die mechanische stufenlose Getriebeeinrichtung bezogen auf den gesamten Betriebsbereich der Antriebsmaschine zumindest nahe ihres Wirkungsgradmaximums betreiben zu können, womit Verlustleistungen im Bereich der Getriebeeinrichtung auf ein Minimum reduzierbar sind und ein Kraftstoffverbrauch einer als Brennkraftmaschine ausgeführten Antriebsmaschine eines mit der erfindungsgemäßen Vorrichtung ausgeführten Fahrzeuges im Vergleich zu bekannten Fahrzeugen, wie Lastkraftwagen, verringerbar ist.

Dabei ist es besonders vorteilhaft, wenn die Übersetzung der Getriebeeinheit derart ausgewählt wird, dass die Drehzahl im Bereich der mechanischen stufenlosen Getriebeeinrichtung, die im statistischen Mittel über einem Routenmix den höchsten Zeitanteil aufweist, im Wirkungsgradoptimum der Getriebeeinrichtung liegt.

Um die erfindungsgemäße Vorrichtung an den jeweils zur Verfügung stehenden Bauraum mit geringem konstruktivem Aufwand angepasst ausführen zu können, ist die Getriebeeinheit bei weiteren vorteilhaften Ausführungsformen der erfindungsgemäßen Vorrichtung im Leistungspfad zwischen der Antriebsmaschine und der mechanischen Getriebeeinrichtung oder zwischen der mechanischen Getriebeeinrichtung und dem Nebenaggregat angeordnet.

Eine ebenfalls konstruktiv einfache und kostengünstige weitere Ausführungsform der erfindungsgemäßen Vorrichtung ist mit einer Getriebeeinheit ausgebildet, die eine wenigstens zwei miteinander kämmende Zahnräder umfassende Zahnradstufe aufweist.

Damit im Bereich der Getriebeeinheit ein Achsversatz zwischen den Zahnräder mit niedrigen Kosten und gleichzeitig geringem konstruktivem Aufwand ausgleichbar ist, sind die beiden Zahnräder der Getriebeeinheit bei einer weiteren Ausführungsform der erfindungsgemäßen Vorrichtung über ein Koppelelement, wie einem Zahnriemen oder eine Kette, miteinander in Wirkverbindung bringbar.

Um im abgeschalteten Betriebszustand des Nebenaggregates unerwünschte Verlustleistungen im Bereich der Vorrichtung vermeiden zu können, ist die Wirkverbindung zwischen dem Nebenaggregat und der Antriebsmaschine bei einer weiteren vorteilhaften Ausführungsform der erfindungsgemäßen Vorrichtung, beispielsweise über eine schaltbare Kupplung, trennbar ausgeführt.

Die Getriebeeinheit umfasst bei einer bauraum- und kostengünstigen sowie einfach betreibbaren Weiterbildung der erfindungsgemäßen Vorrichtung einen Planetenradsatz mit wenigstens drei Wellen, wobei eine erste Welle des Planetenradsatzes mit der Antriebsmaschine und mit einer Getriebeeingangswelle der mechanischen stufenlosen Getriebeeinrichtung, eine zweite Welle des Planetenradsatzes mit einer Getriebeausgangswelle der mechanischen stufenlosen Getriebeeinrichtung und eine dritte Welle des Planetenradsatzes mit dem Nebenaggregat wirkverbunden ist.

Mit dieser letztbeschriebenen Ausführungsform der erfindungsgemäßen Vorrichtung ist über eine entsprechende stufenlose Einstellung der Übersetzung im Bereich der Getriebeeinrichtung ein so genannter Geared-Neutral-Betriebszustand darstellbar, während dem eine Drehzahl der Getriebeausgangswelle der mechanischen Getriebeeinrichtung im Wesentlichen gleich Null ist. Des Weiteren ist über die im Bereich des Planetenradsatzes vorliegende Leistungsverzweigung zudem ein hoher mechanischer Wirkungsgrad realisierbar.

Steht die mechanische Getriebeeinrichtung im Bereich ihrer Getriebeausgangswelle mit einer elektrischen Maschine in Wirkverbindung, in deren Bereich ein Antriebsmoment der Antriebmaschine in elektrischen Strom für den Betrieb des Nebenaggregates umwandelbar ist, sind in Verbindung mit einer einen Planetenradsatz aufweisenden Getriebeeinheit unnötige Nulllastverluste im Bereich der abgeschalteten elektrischen Maschine im rotierenden Betrieb der elektrischen Maschine auf einfache Art und Weise vermeidbar.

Ist die Getriebeeinrichtung im Bereich der Getriebeausgangswelle direkt mit dem Nebenaggregat mechanisch gekoppelt, besteht auf konstruktiv einfache und kostengünstige Art und Weise die Möglichkeit, das Nebenaggregat ohne die elektrischen Komponenten, wie eine elektrische Maschine, Wechselrichter und eine weitere im Bereich des Nebenaggregates erforderliche elektrische Maschine, mit entsprechender Antriebsenergie versorgen zu können.

Eine besonders bauraumgünstige und mit hohem Wirkungsgrad betreibbare Vorrichtung weist eine als Toroidgetriebe ausgebildete mechanische Getriebeeinrichtung auf, über das die Übersetzung der Getriebeeinrichtung innerhalb eines konstruktiv vorgegebenen Übersetzungsbereiches ohne Achsversatz zwischen einer Getriebeeingangswelle und einer Getriebeausgangswelle der Getriebeeinrichtung mit hohem Wirkungsgrad stufenlos veränderbar ist.

Sowohl die in den Patentansprüchen angegebenen Merkmale als auch die in den nachfolgenden Ausführungsbeispielen der erfindungsgemäßen Vorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Vorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine schematisierte Darstellung einer ersten Ausführungsform der erfindungsgemäßen Vorrichtung, die mit einem Antriebsstrang eines Fahrzeuges in Wirkverbindung steht;
- Fig. 2: eine Fig. 1 entsprechende Darstellung einer zweiten Ausführungsform der erfindungsgemäßen Vorrichtung;
- Fig. 3: eine Fig. 1 entsprechende Darstellung einer dritten Ausführungsform der erfindungsgemäßen Vorrichtung; und
- Fig. 4: einen Verlauf eines Wirkungsgrades der Getriebeeinrichtung der Vorrichtung gemäß Fig. 1 bis Fig. 3 über der Übersetzung der Getriebeeinrichtung.

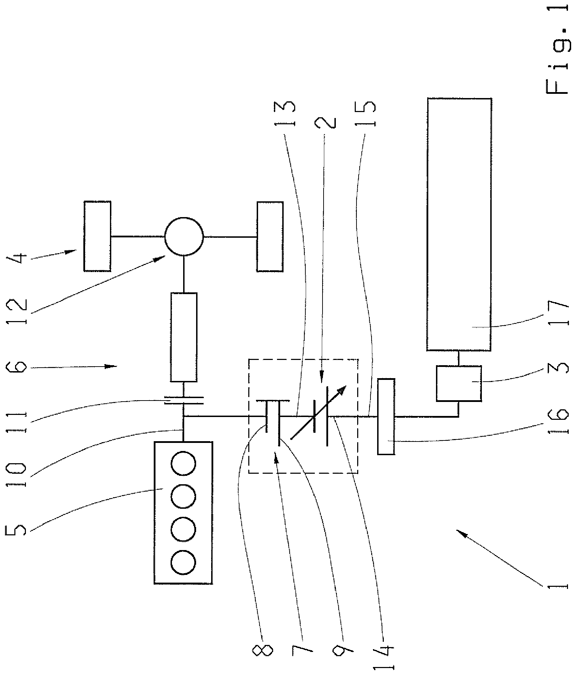

In Fig. 1 ist eine stark schematisierte Darstellung einer ersten Ausführungsform einer Vorrichtung 1 mit einer Getriebeeinrichtung 2 zum Versorgen von wenigstens einem vorliegend als Kühlaggregat ausgeführten Nebenaggregats eines Fahrzeuges 4 mit Antriebsenergie gezeigt. Eine Übersetzung der vorzugsweise als Toroidgetriebe ausführbaren Getriebeeinrichtung 2 ist zumindest bereichsweise stufenlos variierbar und die Getriebeeinrichtung 2 ist eingangsseitig mit einem Antrieb einer Antriebsmaschine 5 eines Antriebsstranges 6 des Fahrzeuges 4 sowie ausgangsseitig mit dem Nebenaggregat 3 in Wirkverbindung bringbar.

Die Getriebeeinrichtung 2 ist vorliegend als mechanische Getriebeeinrichtung ausgeführt. Zusätzlich ist im Leistungspfad zwischen der Antriebsmaschine 5 und dem Nebenaggregat 3 eine Getriebeeinheit 7 vorgesehen, deren Übersetzung derart an die mechanische Getriebeeinrichtung 2 angepasst ist, dass die mechanische Getriebeeinrichtung 2 in einem Hauptbetriebsbereich im Wesentlichen im Bereich ihres Wirkungsgradmaximums betreibbar ist.

Die Getriebeeinheit 7 umfasst zwei miteinander kämmende Zahnräder 8, 9, die eine Zahnradstufe bilden und die im Leistungspfad zwischen der Antriebsmaschine 5 und der mechanischen Getriebeeinrichtung 2 angeordnet sind. Dabei ist das Zahnrad 8 mit einer Motorausgangswelle 10 der Antriebsmaschine 5 im Bereich zwischen der Antriebsmaschine 5 und einer Anfahrkupplung 11 antriebsseitig verbunden, womit ein Antriebsmoment der Antriebsmaschine 5 auf das Zahnrad 8 führbar ist.

Im Bereich der Anfahrkupplung 11 ist ein Kraftfluss zwischen der Antriebsmaschine 5 und einem Abtrieb 12 des Antriebsstranges 6 trennbar, wobei zwischen der Anfahrkupplung 11 und dem Abtrieb 12 vorliegend ein Getriebe 23 vorgesehen ist, in dessen Bereich verschiedene Übersetzungen für Vorwärts- und Rückwärtsfahrt betriebszustandsabhängig darstellbar sind.

Das Zahnrad 9 ist vorliegend mit einer Getriebeeingangswelle 13 der mechanischen stufenlosen Getriebeeinrichtung 2 verbunden, während eine Getriebeausgangswelle 14 mit einer Motorwelle 15 einer generatorisch betreibbaren elektrischen Maschine 16 gekoppelt ist. Im Bereich der elektrischen Maschine 16 ist ein im Bereich der Getriebeeinheit 7 und der Getriebeeinrichtung 2 entsprechend gewandeltes Antriebsmoment der Antriebsmaschine 5 in elektrischen Strom umwandelbar, mit welchem das Nebenaggregat 3 anforderungsgemäß betreibbar ist. Im Bereich der elektrischen Maschine 16 wird vorliegend Drehstrom mit einer Spannung in Höhe von 380 Volt und einer Frequenz von 50 Hertz erzeugt, um über das Kühlaggregat 3 im Bereich eines Kühlaufliegers 17 des Fahrzeuges 4 eine entsprechende Temperatur einstellen zu können.

Die Getriebeeinrichtung 2 kann bei weiteren Ausführungsformen der Vorrichtung 1 auch als Umschlingungsvariator oder dergleichen ausgeführt sein, um die elektrische Maschine 16 unabhängig von der Antriebsdrehzahl der Antriebsmaschine 5 über einen möglichst großen Betriebsbereich mit konstanter Drehzahl betreiben zu können.

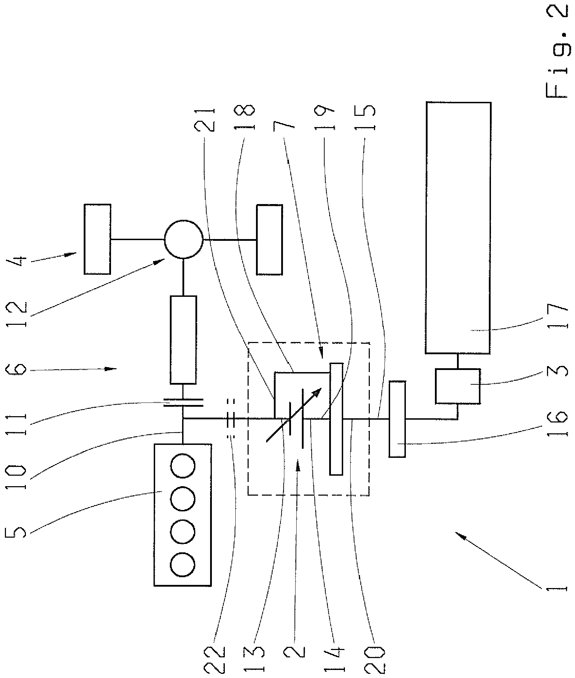

Bei dem in Fig. 2 dargestellten zweiten Ausführungsbeispiel der Vorrichtung 1 umfasst die Getriebeeinheit 7 einen Planetenradsatz 24, wobei eine erste Welle 18 des Planetenradsatzes 24 mit der Antriebsmaschine 5 und der Getriebeeingangswelle 13 der Getriebeeinrichtung 2 verbunden ist. Eine zweite Welle 19 des Planetenradsatzes 24 ist mit der Getriebeausgangswelle 14 der Getriebeeinrichtung 2 und eine dritte Welle 20 des Planetenradsatzes 24 ist mit der Motorwelle 15 der elektrischen Maschine 16 und somit mit dem Nebenaggregat 3 wirkverbunden. Die erste Welle 18 des Planetenradsatzes 24 ist vorliegend über eine Seitenwelle 21 der Getriebeeinrichtung 2 mit der Getriebeeingangswelle 13 gekoppelt, um in abgeschaltetem Betriebszustand der elektrischen Maschine 16 eine Drehzahl der dritten Welle 20 des Planetenradsatzes 24 im Wesentlichen gleich Null darstellen zu können und unnötige Nulllastverluste im Bereich der elektrischen Maschine 16, die im rotierenden Betrieb der abgeschalteten elektrischen Maschine 16 auftreten, zu vermeiden. Zusätzlich ist über den Planetenradsatz 24, mittels dem eine Leistungsverzweigung darstellbar ist, ein höherer mechanischer Wirkungsgrad erzielbar als bei der Ausführung der Vorrichtung 1 gemäß Fig. 1.

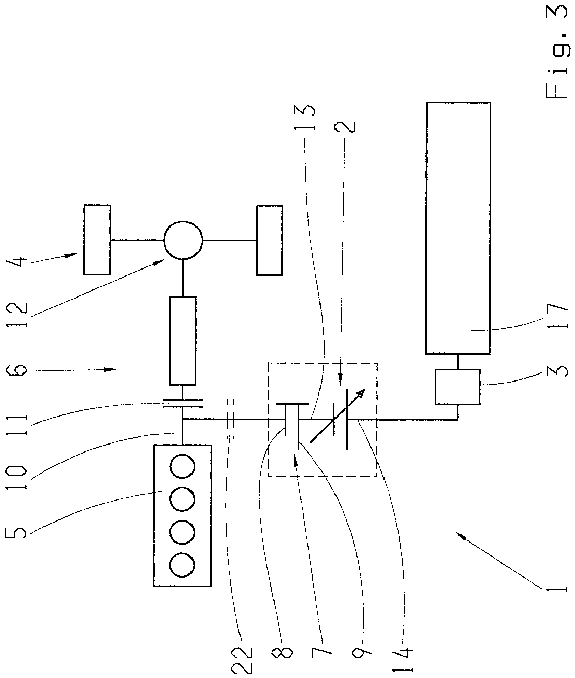

Bei der in Fig. 3 dargestellten dritten Ausführungsform der Vorrichtung 1 ist die Getriebeeinrichtung 2 bzw. deren Getriebeausgangswelle 14 direkt mit dem Nebenaggregat 3 mechanisch gekoppelt, wenn im Fahrzeug 4 ein entsprechender Bauraum zur Verfügung steht. Die direkte mechanische Anbindung des Nebenaggregates 3 an den Leistungspfad des Antriebsstranges 6 des Fahrzeuges 4 bietet auf konstruktiv einfache und kostengünstige Art und Weise die Möglichkeit, das Nebenaggregat 3 ohne die elektrischen Komponenten, wie die elektrische Maschine 16, Wechselrichter und eine weitere im Bereich des Nebenaggregates 3 erforderliche elektrische Maschine, der Vorrichtungen gemäß Fig. 1 und Fig. 2 mit entsprechender Antriebsenergie versorgen zu können.

Um auch mechanische Verluste im Bereich der Wirkverbindung zwischen dem Antriebsstrang 6 des Fahrzeuges 4 und dem Nebenaggregat 3 vermeiden zu können, ist es bei weiteren Ausführungen der Vorrichtung 1 vorgesehen, im Bereich zwischen der Motorausgangswelle 10 und der Vorrichtung 1 eine optionale Trennkupplung 22 vorzusehen, über die die Vorrichtung 1 vom Leistungsfluss des Antriebsstranges 6 betriebszustandsabhängig entkoppelbar ist.

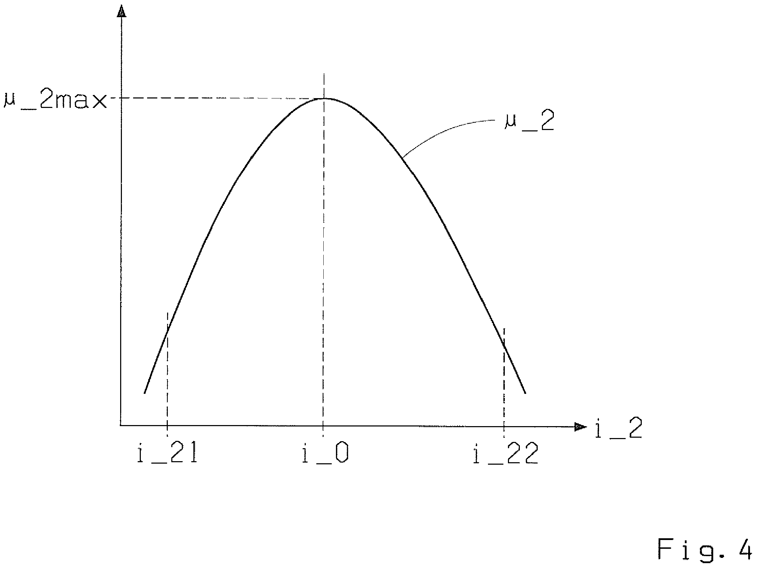

Fig. 4 zeigt einen Verlauf eines Wirkungsgrades µ_2 der Getriebeeinrichtungen 2 der Vorrichtungen 1 gemäß Fig. 1 bis Fig. 3 über der Übersetzung i_2 der Getriebeeinrichtungen 2. Aus der Darstellung gemäß Fig. 4 geht hervor, dass die mechanischen stufenlosen Getriebeeinrichtungen 2 in Randbereichen eines durch die Übersetzungswerte i_21 und i_22 begrenzten Übersetzungsbereiches, innerhalb dem die Übersetzung i_2 der Getriebeeinrichtung 2 stufenlos verstellbar ist, jeweils einen stark abfallenden Wirkungsgrad µ_2 aufweisen. Um die Getriebeeinrichtungen 2 über einen möglichst großen Betriebsbereich bzw. Drehzahlbereich der Antriebsmaschine 5 zumindest nahe ihrer Wirkungsgradmaxima µ_2max betreiben zu können, ist die Übersetzung der Getriebeeinheit 7 jeweils derart konstruktiv vorgegeben, dass die Drehzahl der Antriebsmaschine 5, die im statistischen Mittel über dem Routenmix den höchsten Zeitanteil aufweist, hauptsächlich mit einer im Bereich der Getriebeeinrichtung 2 eingestellten Übersetzung i_0 gewandelt wird, zu dem die Getriebeeinrichtungen 2 jeweils im Wirkungsgradoptimum µ_2max betrieben werden.

### Bezugszeichen

- 1: Vorrichtung
- 2: Getriebeeinrichtung
- 3: Nebenaggregat
- 4: Fahrzeug
- 5: Antriebsmaschine
- 6: Antriebsstrang
- 7: Getriebeeinheit
- 8, 9: Zahnrad
- 10: Motorausgangswelle
- 11: Anfahrkupplung
- 12: Abtrieb
- 13: Getriebeeingangswelle
- 14: Getriebeausgangswelle
- 15: Motorwelle
- 16: elektrische Maschine
- 17: Kühlauflieger
- 18: erste Welle
- 19: zweite Welle
- 20: dritte Welle
- 21: Seitenwelle
- 22: Trennkupplung
- 23: Getriebe
- 24: Planetenradsatz
- i_2: Übersetzung der Getriebeeinrichtung
- µ_2: Wirkungsgrad der Getriebeeinrichtung
- µ_2max: Wirkungsgradmaximum der Getriebeeinrichtung

## Patentansprüche

1. Vorrichtung (1) mit einer Getriebeeinrichtung (2) zum Versorgen von wenigstens einem Nebenaggregat (3) eines Fahrzeuges (4) mit Antriebsenergie, wobei eine Übersetzung (i_2) der Getriebeeinrichtung (2) zumindest bereichsweise stufenlos variierbar ist und die Getriebeeinrichtung (2) eingangsseitig mit einem Antrieb einer Antriebsmaschine (5) eines Antriebsstranges (6) des Fahrzeuges sowie ausgangsseitig mit dem Nebenaggregat (3) in Wirkverbindung bringbar ist, **dadurch gekennzeichnet, dass** die Getriebeeinrichtung (2) als mechanische Getriebeeinrichtung ausgeführt ist und im Leistungspfad zwischen der Antriebsmaschine (5) und dem Nebenaggregat (3) eine Getriebeeinheit (7) vorgesehen ist, deren Übersetzung derart an die mechanische Getriebeeinrichtung (2) angepasst ist, dass die mechanische Getriebeeinrichtung (2) in einem Hauptbetriebsbereich im Wesentlichen im Bereich ihres Wirkungsgradmaximums (µ_2max) betreibbar ist.

2. Vorrichtung nach Anspruch 1, **dadurch gekennzeichnet, dass** die Getriebeeinheit (7) im Leistungspfad zwischen der Antriebsmaschine (5) und der mechanischen Getriebeeinrichtung (2) oder zwischen der mechanischen Getriebeeinrichtung (2) und dem Nebenaggregat (3) angeordnet ist.

3. Vorrichtung nach Anspruch 1 oder 2, **dadurch gekennzeichnet, dass** die Getriebeeinheit (7) eine wenigstens zwei miteinander kämmende Zahnräder (8, 9) umfassende Zahnradstufe aufweist.

4. Vorrichtung nach Anspruch 3, **dadurch gekennzeichnet, dass** die beiden Zahnräder der Getriebeeinheit über ein Koppelelement, wie einem Zahnriemen oder eine Kette, miteinander in Wirkverbindung stehen.

5. Vorrichtung nach einem der Ansprüche 1 bis 4, **dadurch gekennzeichnet, dass** die Wirkverbindung zwischen dem Nebenaggregat (3) und der Antriebsmaschine (5) trennbar ausgeführt ist.

6. Vorrichtung nach einem der Ansprüche 1 bis 5, **dadurch gekennzeichnet, dass** die Getriebeeinheit (7) einen Planetenradsatz mit wenigstens drei Wellen (18, 19, 20) aufweist, wobei eine erste Welle (18) des Planetenradsatzes (24) mit der Antriebsmaschine (5) und mit einer Getriebeeingangswelle (13) der mechanischen Getriebeeinrichtung (2), eine zweite Welle (19) des Planetenradsatzes (24) mit einer Getriebeausgangswelle (14) der mechanischen Getriebeeinrichtung (2) und eine dritte Welle (20) des Planetenradsatzes (24) mit dem Nebenaggregat (3) wirkverbunden ist.

7. Vorrichtung nach einem der Ansprüche 1 bis 6, **dadurch gekennzeichnet, dass** die mechanische Getriebeeinrichtung (2) mit einer elektrischen Maschine (16) in Wirkverbindung steht, in deren Bereich ein Antriebsmoment der Antriebsmaschine (5) in elektrischen Strom für den Betrieb des Nebenaggregates (3) umwandelbar ist.

8. Vorrichtung nach einem der Ansprüche 1 bis 6, **dadurch gekennzeichnet, dass** ist die Getriebeeinrichtung (2) im Bereich der Getriebeausgangswelle (14) direkt mit dem Nebenaggregat (3) mechanisch gekoppelt ist.

9. Vorrichtung nach einem der Ansprüche 1 bis 8, **dadurch gekennzeichnet, dass** die mechanische Getriebeeinrichtung (2) als ein Toroidgetriebe ausgebildet ist.

10. Vorrichtung nach einem der Ansprüche 1 bis 9, **dadurch gekennzeichnet, dass** das Nebenaggregat (3) ein Kühlaggregat ist.

## Geänderte Patentansprüche

### Geänderte Patentansprüche gemäss Regel 137(2) EPÜ.

**1.** Antriebsstrang (6) eines Fahrzeuges (4) mit einer Antriebsmaschine (5) und mit einer Vorrichtung (1) mit einer Getriebeeinrichtung (2) zum Versorgen von wenigstens einem Nebenaggregat (3) des Fahrzeuges (4) mit Antriebsenergie, wobei eine Übersetzung (i_2) der Getriebeeinrichtung (2) zumindest bereichsweise stufenlos variierbar ist und die Getriebeeinrichtung (2) eingangsseitig mit einem Antrieb der Antriebsmaschine (5) sowie ausgangsseitig mit dem Nebenaggregat (3) in Wirkverbindung bringbar ist, und wobei die Getriebeeinrichtung (2) als mechanische Getriebeeinrichtung ausgeführt ist und im Leistungspfad zwischen der Antriebsmaschine (5) und dem Nebenaggregat (3) eine Getriebeeinheit (7) vorgesehen ist, **dadurch gekennzeichnet, dass** die Übersetzung der Getriebeeinheit (7) derart an die mechanische Getriebeeinrichtung (2) angepasst ist, dass die mechanische Getriebeeinrichtung (2) eine Drehzahl der Antriebsmaschine (5), die im statistischen Mittel über dem Routenmix den höchsten Zeitanteil aufweist, im Wesentliche im Bereich des Wirkungsgradmaximums (µ_2max) der Getriebeeinrichtung (2) wandelt.

**2.** Antriebsstrang nach Anspruch 1, **dadurch gekennzeichnet, dass** die Getriebeeinheit (7) im Leistungspfad zwischen der Antriebsmaschine (5) und der mechanischen Getriebeeinrichtung (2) oder zwischen der mechanischen Getriebeeinrichtung (2) und dem Nebenaggregat (3) angeordnet ist.

**3.** Antriebsstrang nach Anspruch 1 oder 2, **dadurch gekennzeichnet, dass** die Getriebeeinheit (7) eine wenigstens zwei miteinander kämmende Zahnräder (8, 9) umfassende Zahnradstufe aufweist.

**4.** Antriebsstrang nach Anspruch 3, **dadurch gekennzeichnet, dass** die beiden Zahnräder der Getriebeeinheit über ein Koppelelement, wie einem Zahnriemen oder eine Kette, miteinander in Wirkverbindung stehen.

**5.** Antriebsstrang nach einem der Ansprüche 1 bis 4, **dadurch gekennzeichnet, dass** die Wirkverbindung zwischen dem Nebenaggregat (3) und der Antriebsmaschine (5) trennbar ausgeführt ist.

**6.** Antriebsstrang nach einem der Ansprüche 1 bis 5, **dadurch gekennzeichnet, dass** die Getriebeeinheit (7) einen Planetenradsatz mit wenigstens drei Wellen (18, 19, 20) aufweist, wobei eine erste Welle (18) des Planetenradsatzes (24) mit der Antriebsmaschine (5) und mit einer Getriebeeingangswelle (13) der mechanischen Getriebeeinrichtung (2), eine zweite Welle (19) des Planetenradsatzes (24) mit einer Getriebeausgangswelle (14) der mechanischen Getriebeeinrichtung (2) und eine dritte Welle (20) des Planetenradsatzes (24) mit dem Nebenaggregat (3) wirkverbunden ist.

**7.** Antriebsstrang nach einem der Ansprüche 1 bis 6, **dadurch gekennzeichnet, dass** die mechanische Getriebeeinrichtung (2) mit einer elektrischen Maschine (16) in Wirkverbindung steht, in deren Bereich ein Antriebsmoment der Antriebsmaschine (5) in elektrischen Strom für den Betrieb des Nebenaggregates (3) umwandelbar ist.

**8.** Antriebsstrang nach einem der Ansprüche 1 bis 6, **dadurch gekennzeichnet, dass** ist die Getriebeeinrichtung (2) im Bereich der Getriebeausgangswelle (14) direkt mit dem Nebenaggregat (3) mechanisch gekoppelt ist.

**9.** Antriebsstrang nach einem der Ansprüche 1 bis 8, **dadurch gekennzeichnet, dass** die mechanische Getriebeeinrichtung (2) als ein Toroidgetriebe ausgebildet ist.

**10.** Antriebsstrang nach einem der Ansprüche 1 bis 9, **dadurch gekennzeichnet, dass** das Nebenaggregat (3) ein Kühlaggregat ist.
